# EUROPEAN PATENT SPECIFICATION

(11) **EP 1 652 338 B1**
(45) Date of publication and mention of the grant of the patent: **28.11.2012**
(21) Application number: 03817925.5
(22) Date of filing: 22.07.2003
(51) Int. Cl.: H04L 12/14, H04M 15/00, H04L 12/56

(54) **AN ARRANGEMENT, A NODE AND A METHOD RELATING TO HANDLING OF LOST/DISCARDED DATA PACKETS**
ANORDNUNG, KNOTEN UND VERFAHREN IN BEZUG AUF DIE BEHANDLUNG VERLORENER/VERWORFENER DATENPAKETE
SYSTEME, NOEUD ET PROCEDE POUR LE TRAITEMENT DE PAQUETS DE DONNEES PERDUES/REJETEES

(43) Date of publication of application: 03.05.2006
(73) Proprietor: Telefonaktiebolaget LM Ericsson (publ), 164 83 Stockholm (SE)
(72) Inventor: LUNDIN, Niklas, S-423 34 TORSLANDA (SE); LARSSON, Anders, P., S-431 34 Mölndal (SE)
(74) Representative: Tonscheidt, Andreas
(86) International application number: PCT/EP2003/007995
(87) International publication number: WO 2005/015825

(56) References cited:
- US-A- 5 142 653
- US-A- 5 995 508
- US-B1- 6 512 761
- US-B1- 6 680 946

## Description

### FIELD OF THE INVENTION

The present invention relates to an arrangement for allowing compensation or correction in relation to lost or unsent data packets on the downlink in a communications system supporting communication of packet data and classification of mobile data packet traffic in order to allow content based or flexible charging for different types of traffic.

The invention also relates to a packet data node allowing compensation or correction as referred to above. Still further the invention relates to a method for allowing charging correction or compensation for lost or unsent data packets on the downlink in a communications system supporting communication of packet data and content based or flexible charging depending on traffic type.

### STATE OF THE ART

Charging associated with communication with a mobile station is a problematic issue. Operators at an early stage realized that it is risky to base charging on volume as well as on time since it is difficult to establish how much of the desired/intended traffic that actually reaches the subscriber, or if it is lost or discarded on its way on the downlink towards the mobile station, and further since packets may be resent serveral times. It is known to divide or classify different types of traffic e.g. into different service classes (QoS) among others depending on how urgent traffic is, how important it is that all packets arrive etc. Furthermore it is known to implement different charging schemes for different types of traffic, e.g. a content based functionality or a flexible (bearer) charging functionality. It is known to implement such a functionality on a gateway packet data node, e.g. GGSN (Gateway GPRS Support Node), which then performs a classification of mobile traffic. This classification is then used to apply different charging schemes to different types of traffic. However, on the downlink, on its way to a mobile station, data traffic may be lost or discarded. Examples thereon are e.g. when traffic is thrown or discarded due to the fact that it has a lower priority when e.g. radio resources are scarce. In GSM/GPRS (UMTS) data traffic can be lost or discarded in e.g. the nodes SGSN (Serving GPRS Support Node) or in BSC (Base Station Controller). In e.g. WCDMA data traffic. may be lost in SGSN or RNC (Radio Network Controller).

There is still no satisfactory and complete solution for the handing of lost traffical packets on the downlink for charging purposes if a flexible or content based charging functionality is implemented. The GGSN (for example) charges (differently) for different types of traffic (applications), and sometimes a part of the traffic that the subscriber is charged for actually never reached the subscriber. This is a serious problem, not only for the subscriber, who has to pay for information he did not receive, but also for the operator since it severly may reduce and affect customer's confidence in the operator, and the offered services. A node comprising the above discussed flexible charging functionality classifies the traffic and applies the appropriate chargning scheme. However, later on their path towards the subscriber, downlinks, packet losses may occur. The amounts of packets that are lost could be counted in SGSN, but it is not possible for SGSN to acquire information as to which type or class lost packets belonged to. Even more, it is not possible for GGSN (i.e. the node handling classification and flexible charging) to acquire such information.

United States Patent 6,512,761 already describes a system for adjusting or establishing transmission fees based on delay and/or jitter over a given transmission system. As an example, a service provider may also establish credits for low quality voice transmissions or may award marginal charges or credits for lost packets. However, also this patent does not address the above problems or provide a solution for them.

### SUMMARY OF THE INVENTION

What is needed is therefore an arrangement that allows for more accurate charging, i.e. an arrangement through which a user can be charged for the packets that actually do arrive to the user. It is also needed an arrangement implementing flexible or content depending charging through which losses of packets can be taken into account, irrespectively of where on the downlink such losses occur, particularly in an SGSN, a BSC and/or an RNC.

Still further an arrangement is needed through which more accurate charging can be provided, if real time based charging is implemented or if CDR (Charging Data Record) based charging is implemented, i.e. non-real-time based charging.

Further yet an arrangement is needed which is easy and cheap to install and implement, and the operation of which is secure.

A node for implementing such a functionality in operative cooperation with subsequent nodes downlinks is also needed through which one or more of the above mentioned objects can be achieved. A method for fulfilling one or more of the above mentioned objects is also needed.

Therefore an arrangement as initially referred to and having the characterizing features of claim 1 is provided.

A node having the characterizing features of claim 22 is therfore also provided.

Therefore also a method as initially referred to is provided which has the characterizing features of claim 26. Advantageous and preferred or alternative embodiments are given by the appended subclaims.

### BRIEF DESCRIPTION OF THE DRAWINGS

The invention will in the following be further described in a nonlimiting manner, and with reference to the accompanying drawings, in which:
- Fig. 1: is a very schematical block diagram illustrating an arrangement in an implementation to a GSM/GPRS system wherein flexible charging is implemented in GGSN,
- Fig. 2: is a very schematical block diagram similar to Fig. 1 illustrating an implementation to a UMTS/GPRS system wherein flexible charging is implemented in GGSN,
- Fig. 3: is a very schematical block diagram similar to Fig. 1 and Fig. 2 for a dual access node (SGSN) and wherein flexible charging is implemented,
- Fig. 4: is a block diagram illustrating an implementaion in which flexible charging is implemented in SGSN,
- Fig. 5: is a block diagram illustrating a combined gateway and serving packet data node (CGSN) supporting flexible charging,
- Fig. 6: is a signalling diagram for an arrangement as in Fig. 1, for one particular implementation,
- Fig. 7: is a signalling diagram for an arrangement as in Fig. 2 for one specific implementation,
- Fig. 8: is a signalling diagram for a dual access SGSN node according to another implementation,
- Fig. 9: is a flow diagram describing the procedure according to an implementation in which GGSN supports flexible/content based charging,
- Fig. 10: is a flow diagram describing the procedure where SGSN supports a flexible, content based charging functionality,
- Fig. 11: is a flow diagram illustrating an embodiment wherein reports are included in Charging Data records,
- Fig. 12: is a flow diagram illustrating an embodiment in which real time correction/compensation is allowed,
- Fig. 13: shows the signal format and introduction of info between an access node and an RNC, and
- Fig. 14: shows the signal format and introduction of information between an access node and BSC.

### DETAILED DESCRIPTION OF THE INVENTION

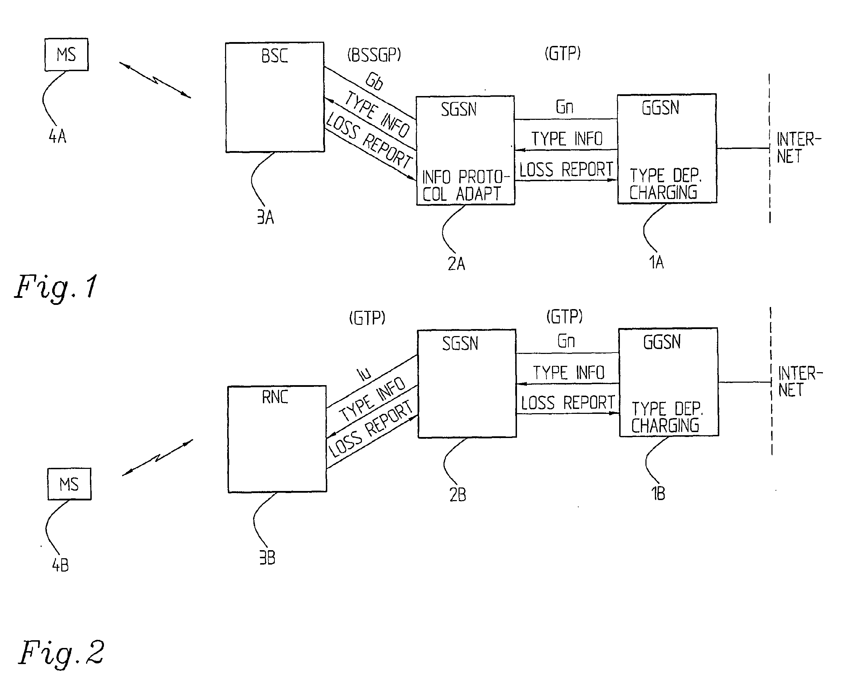

In the embodiment illustrated in Fig. 1 it is supposed that, in a GSM/GPRS system, GGSN 1A supports a type dependent charging functionality, i.e. charging depends on type of traffic, or service class belonging of the traffic (e.g. IP flow based bearer level charging). GGSN 1A communicates with SGSN 2A over the Gn-interface using the GTP (GPRS Tunneling Protocol) as is known per se, cf. 3GPP TS 29.060, which herewith is incorporated herein by reference. GGSN 1A here adds traffic type information (identified as a part of a type dependent charging functionality including classification of traffic, or separately obtaining type/classification information) to the GTP header of the downlink (DL) payload. The type information may be of different kinds, it may e.g. contain service class information, e.g. a service class tag. In addition thereto it may contain cost or rating information. It may also, in an advantageous implementation, contain chain id, which is used to identify the chain an IP packet belongs to when IP packets sharing the same service class cannot be identified until the key-IP packet for the particular chain has arrived at GGSN, or until a required number of packets have arrived. If this information is not included, it should be noted that loss of such a packet cannot be compensated for, but in some cases this might be acceptable.

SGSN 2A provides for the type information (at least) being sent also to BSC 3A (in this case). Only one BSC is shown in the figure for reasons of clarity. As is known the G_{b} interface is used between BSC and SGSN and BSSGP is used as communication protocol. BSSGP, Base Station System GPRS Protocol is described in 3GPP TS 48.018, which herewith is incorporated herein by reference. Since different protocols are used between GGSN and SGSN and SGSN and BSC respectively, the type info cannot simply be forwarded by SGSN to BSC, but instead a new information element with at least the type information may be added to the BSSGP DL-UNITDATA PDU (Packet Data Unit). MS 4A is shown merely for illustrative purposes in the figure.

Traffic can be discarded either by SGSN 2A or by BSC 3A. In case SGSN 2A discards traffic, the type information (at least) of the the discarded payload is added to the CDR (in a new field thereof). A loss report is sent to GGSN 1A if real-time compensation is implemented. In this embodiment it is not limited to sending of loss reports in any specific manner. It can be done based on time, volume, CDR:s may be used in a conventional manner by the operator to provide for compensation on a more or less regular basis, e.g. at night, when CDR:s are checked in any case. This will be further discussed below.

If instead it is BSC 3A that discards traffic this is reported in a loss report to SGSN 2A. This is illustrated in the figure but it may just as well be SGSN that discards traffic; SGSN has to report it to GGSN irrespectinely if it being SGSN itself or BSC that has discarded traffic if real-time compensation is supported. In this embodiment BSC 3A notes the type information (e.g. at least service class tag) in the BSSGP header and includes it as a new information element in the BSSGP header, as a new information element in BSSGP LLC (Logical Link Control) Discarded message towards SGSN 2A. (Real time compensation may be supported or not as discussed above).

When a loss report from BSC 3A, i.e. a report of discarded traffic, is received in SGSN 2A, this information is included in the appropriate CDR in a new field by SGSN 2A. The CDR can then be post-processed together with the data of the type dependent charging functionality provided by the GGSN 1A to allow for a charging in which compensation is provided for lost traffic.

If real time compensation should be supported, a new GTP message, e.g. GTP Discarded traffic report has to be sent to the GGSN 1A (both if SGSN or BSC discarded the traffic) containing the information of the loss report together with IMSI and NSAPI (Network layer Service Access Point Identifier). If real time compensation is implemented, it is not, for the functioning of the inventive concept, necessary to include the loss report information in a CDR, but it may be advantageous to do so in order to keep the information that might be useful.

Fig. 2 is a Fig similar to Fig. 1 but with the difference that SGSN 2B supports communication with RNC 3B (UMTS). Also here it is supposed that GGSN 1B supports a type dependent charging functionality. MS 4B is merely shown for reasons of completeness. The interface used between SGSN 2B and RNC 3B is Iu as is known per se. However, in this case the GTP protocol is used also between SGSN 2B and RNC 3B, which makes it easier. The type information may then simply be forwarded from SGSN 2B as e.g. the same service tag to the RNC 3B. If RNC 3B discards traffic, it notes the type info, e.g. at least service tag as discussed with reference to Fig. 1, and sends this information as a new information element in RANAP Data Volume Report to SGSN 2B. (For non-real time compensation the message may be sent either when a RAB (Radio Access Bearer) is lost, or when PDP context is deactivated, whereas for real-time implementations the report should be sent immediately when traffic is discarded.)

RANAP, Radio Access Network Application Part, is discussed in 3GPP TS 25.413, which herewith is incorporated herein by reference. When a loss report (Data Volume Report) is received in SGSN, this info may be included in the correct CDR in a new field as discussed with reference to Fig. 1.

It should be noted that for non-real time embodiments, the loss report does not have to be sent to GGSN, whereas for real time compensation embodiments the report has to be provided to GGSN (with IMSI and NSAPI (or correspondingly) as discussed above). Generally the invention suggests a mechanism that makes it possible for an SGSN to identify which traffic class and cost/rating information discarded traffic had been allocated by a GGSN.

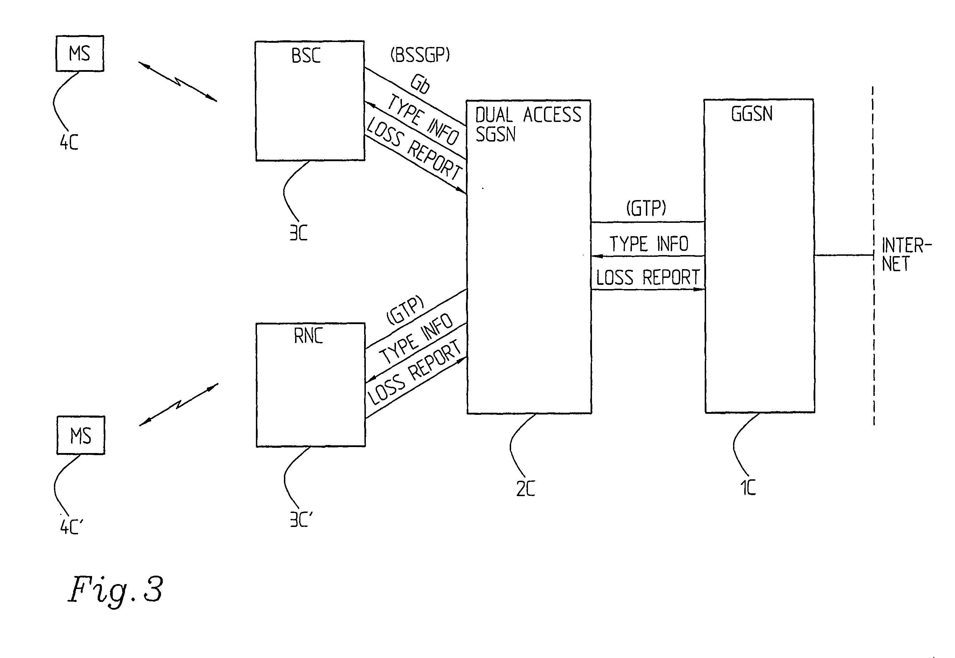

Fig. 3 is an embodiment in which the SGSN 2C (in communication with GGSN 1C) comprises a Dual Access Node supporting communication with BSC 3C as well as with RNC 3C'. MS 4C, 4C' are illustrated for reasons of completeness.

The functioning is the same as that described above with reference to Figs. 1 and 2, real time handling being supported or not, loss reports to GGSN 1C only being relevant for real time charging cases, whereas if CDR based charging is implemented, this is not necessary.

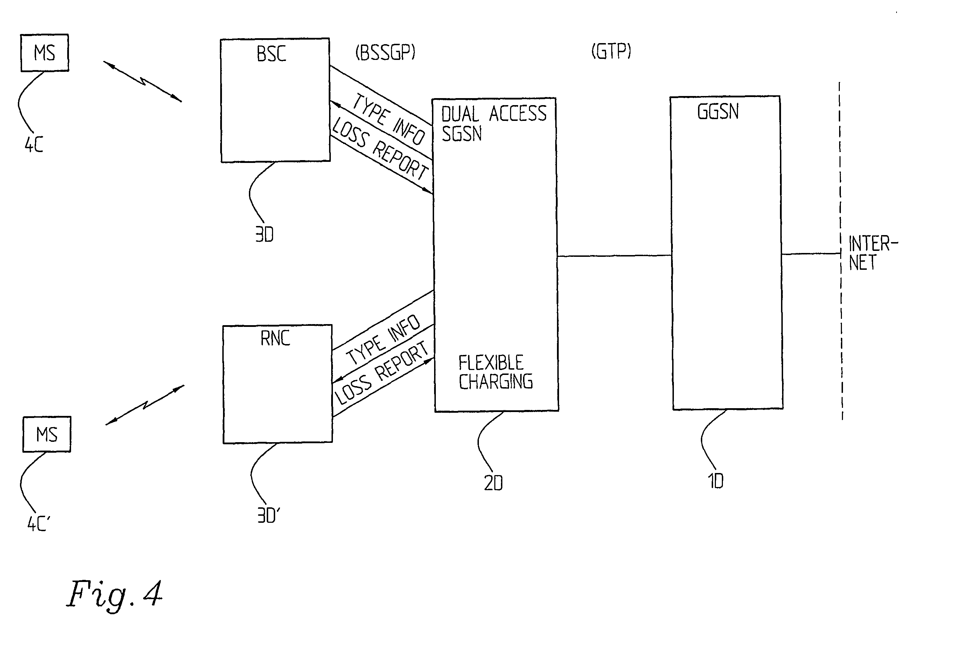

Fig. 4 shows an alternative implementation in which the type dependent, or flexible, charging functionality is provided in SGSN 2D instead of in GGSN 1D. It is here supposed that SGSN 2D is a dual access node supporting communication with BSC 3D as well as RNC 3D'. However, the inventive concept of course also covers the case when SGSN 2D only supports BSC 3D or RNC 3D'. The functioning is the same as that described with reference to Figs. 1-3 with the difference that sending of type info (e.g. service class tag and possibly cost/rating info and/or chain id) between GGSN 1D and SGSN 2D is not necessary, neither to send any loss reports to GGSN.

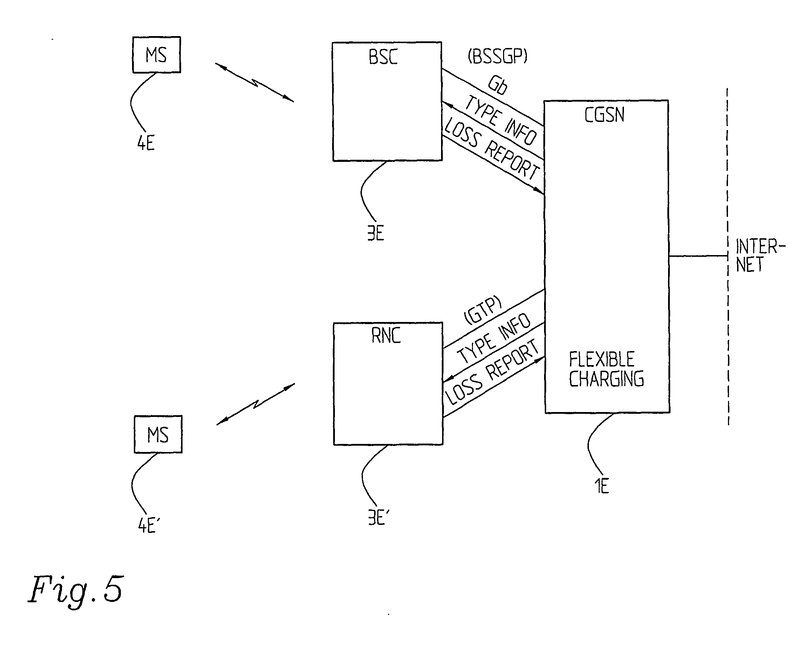

Fig. 5 shows still another implementation wherein a CGSN 1E is implemented which comprises the functionality of both a GGSN and a SGSN. CGSN 1E may support a dual access functionality or not i.e. support both or either of BSC 3E, RNC 3E'. The functioning is the same as that described in the foregoing, with the difference that no communication with a separate GGSN is needed, which thus makes the procedure even more straightforward.

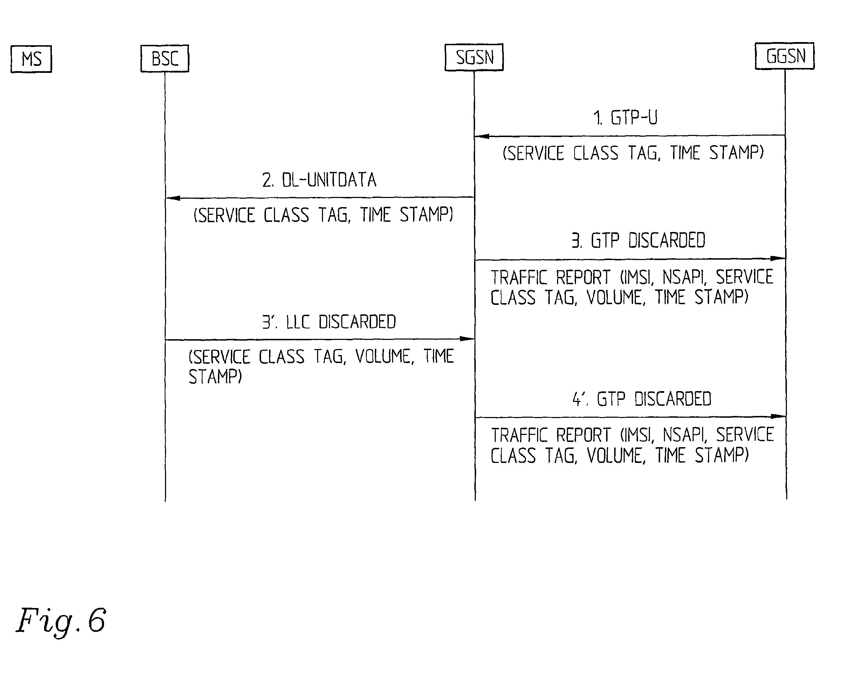

Fig. 6 is a signalling diagram illustrating the inventive procedure for an embodiment in which flexible/content based charging is supported in GGSN, in which SGSN supports communication with BSC:s and in which it is allowed for real time compensation of lost traffic.

It is here supposed that GGSN adds service class tag and a time stamp to the GTP header of the DL payload, 1. A time stamp is here used as an alternative to sending cost/rating info, which instead is identified in GGSN when a discarded traffic report with time stamp is received in GGSN. Chain id may be included or not. SGSN adds a new information element to BSSGP DL-UNITDATA, 2, and sends the service class tag info and time stamp on to BSC.

If SGSN discards traffic, a GTP Discarded traffic report with IMSI, NSAPI, service class tag, volume and time stamp is sent to GGSN in a new GTP message, 3, substantially immediately at occurrence of the loss.

If on the other hand BSC discards traffic, BSC includes the relevant info, here service class tag, volume, time stamp in a BSSGP LLC Discarded message towards SGSN, 3'.

To enable real-time compensation in the GGSN, a new GTP message, e.g. GTP discarded traffic report with IMSI, NSAP1, service class tag, volume and time stamp (here) is sent to GGSN, 4', substantially as soon as SGSN detects or is informed of the loss.

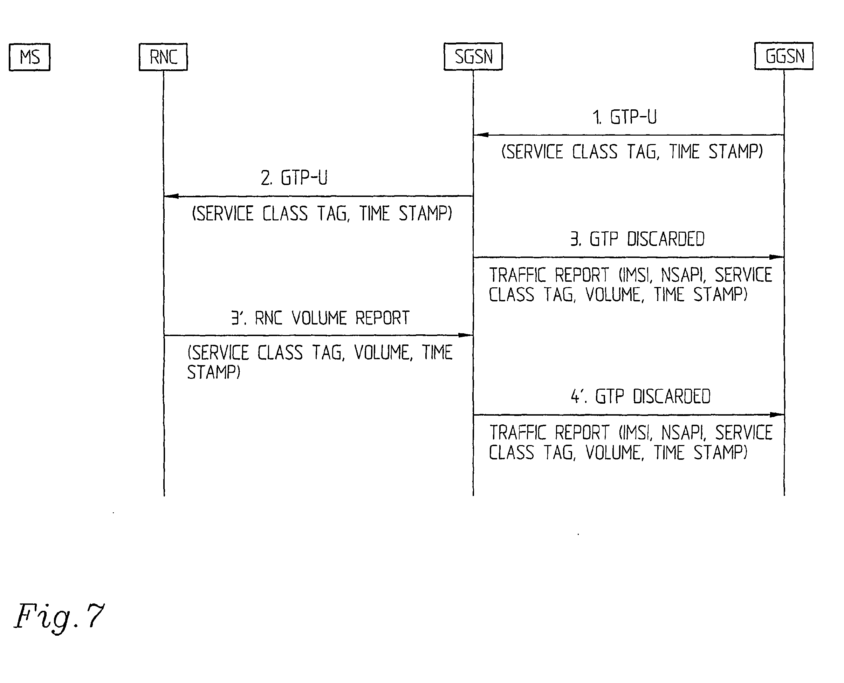

In the signalling diagram of Fig. 7 it is supposed that the SGSN access node only supports RNC communication. In the other aspects the same principles as in the embodiment of Fig. 6 apply. Thus, here the service class tag and the time stamp is simply forwarded, 2, by SGSN to RNC since also between SGSN and RNC the GTP protocol is used (GTP-U, userplane). If RNC discards traffic, RNC sends a volume report with service class tag, volume and time stamp to SGSN, 3'. The signalling denoted 1, 3, 4' in Fig. 7 corresponds to the signalling with the corresponding references in Fig. 6.

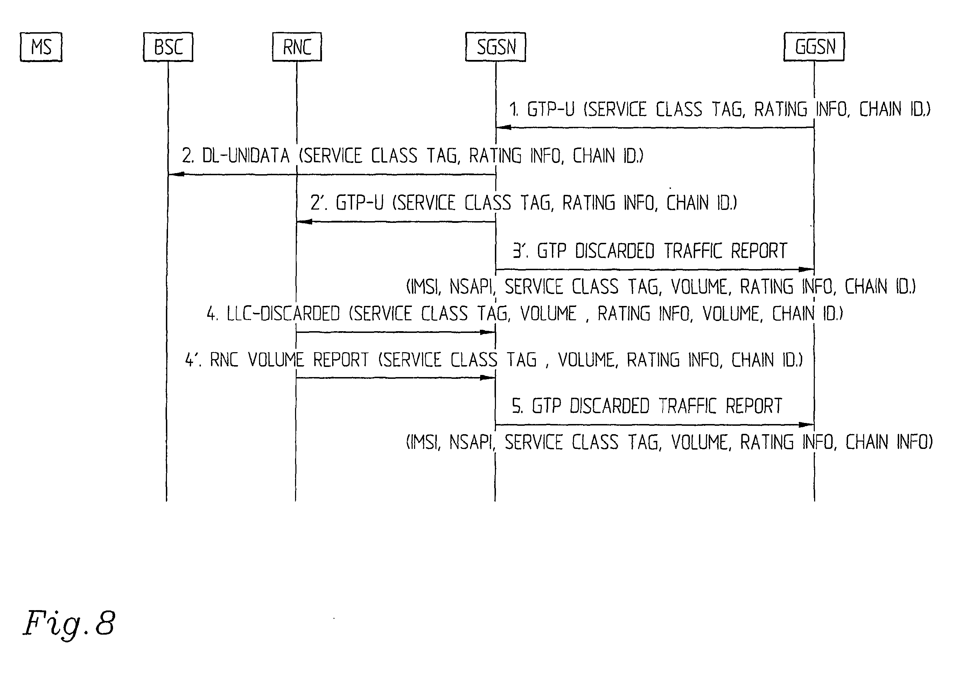

Fig. 8 is a signalling diagram relevant for another implementation supporting real-time compensation for lost packets. It is here supposed that SGSN is a dual access node, but an implementation as in Fig. 8 of course also is possible if SGSN only supports BSC or RNC, in which cases the corresponding signalling to/from the node not supported should be deleted from Fig. 8. Like in Figs 6, 7 it is supposed that a flexible charging functionality is supported by GGSN. The difference from Figs 6, 7 is that the information provided to SGSN, BSC and/or RNC contains service class tag, rating info and chain id and that the loss reports contain IMSI, NSAPI, service class tag, volume, rating info and chain id.

If flexible charging is supported by SGSN or if SGSN and GGSN are combined into a CGSN, the messageing between SGSN-GGSN is of course superfluous.

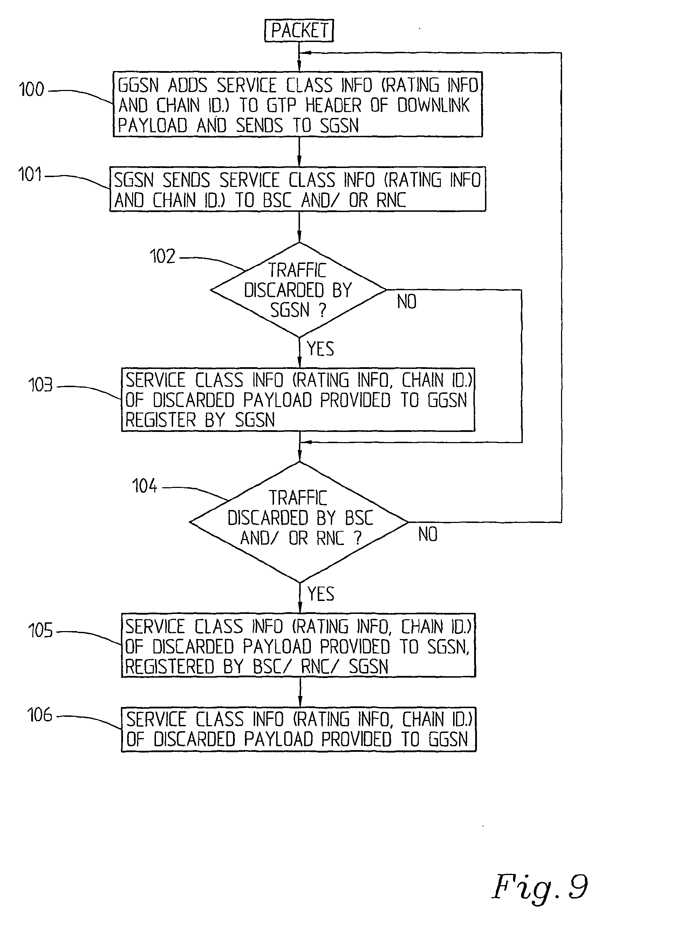

Fig. 9 illustrates, in the form of a flow diagram, the procedure when GGSN supports flexible/content based charging. GGSN here adds service class info (and preferably rating info and chain id) to the GTP header of the downlink (DL) payload, and sends to SGSN, 100. SGSN sends service class info (rating info, chain id) to BSC and/or RNC, 101. If/when traffic is discarded by SGSN, 102 yes, service class info (rating info, chain id) of the discarded payload is provided to GGSN and registered by SGSN, 103 (for a real time implementation). If (when) traffic is discarded by BSC/RNC, 104 yes, service class info (rating info, chain id) of the discarded payload is provided to SGSN and registered by BSC/RNC/SGSN, 105. Subsequently, for real time compensation, service class info (rating info, chain id) of discarded payload is provided from SGSN to GGSN, 106.

For real time implementations loss reports to SGSN/GGSN are provided substantially immediately upon occurrence to GGSN, including e.g. IMSI, NSAPI as discussed above.

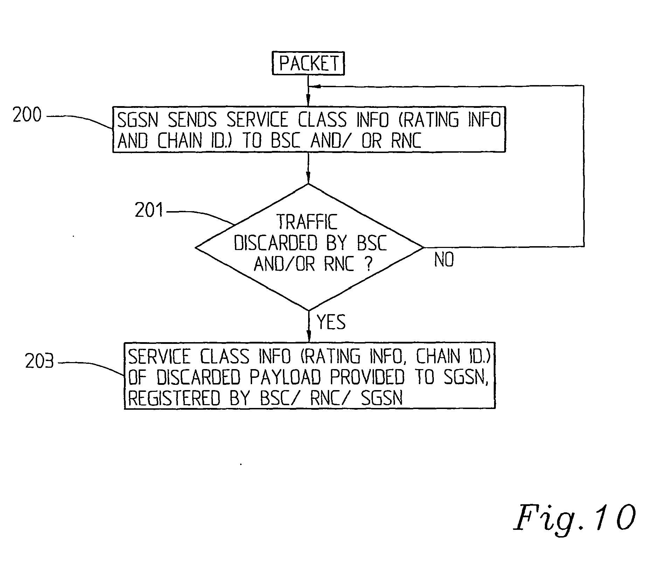

Fig. 10 is a flow diagram describing a procedure as in Fig. 9, but wherein the flexible/content based charging functionality is supported by SGSN. As can be seen only steps 101, 104 and 105 remain, here denoted 200, 201, 202. As can be seen, the procedure is considerably facilitated.

The functioning will be substantially the same if a CGSN node is used.

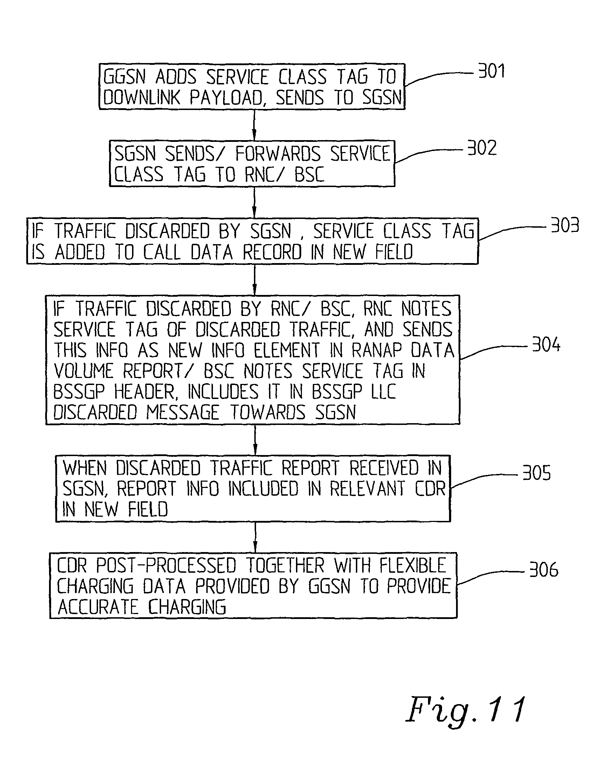

Fig. 11 is a flow diagram describing an implementation of the inventive concept when CDR based charging (not in real time) is implemented. As discussed above, GGSN adds a service class tag to the downlink payload sent to SGSN, 301. SGSN sends/forwards the service class tag to RNC/BSC, 302. If traffic is discarded by SGSN, the service class tag is added to the appropriate Call Data Record (CDR) in a new field, 303, and compensation for lost traffic is performed e.g. by the operator using information as to type etc provided by GGSN when the CDR is handled, e.g. at night.

If traffic is discarded by RNC, RNC notes the service tag of the discarded traffic and sends this info as a new information element in a RANAP Data Volume Report. If traffic is discarded by BSC, BSC notes the service tag in the BSSGP header, includes it in a BSSGP LLC Discarded message towards SGSN, 304.

When such a discarded traffic report is received in SGSN, the report info is included in the appropriate CDR in a new field, cf. step 303 above. After step 303 and/or 305, the CDR is post-processed together with the flexible charging data info provided to SGSN by GGSN to provide for accurate charging with lost traffic compensation, 306.

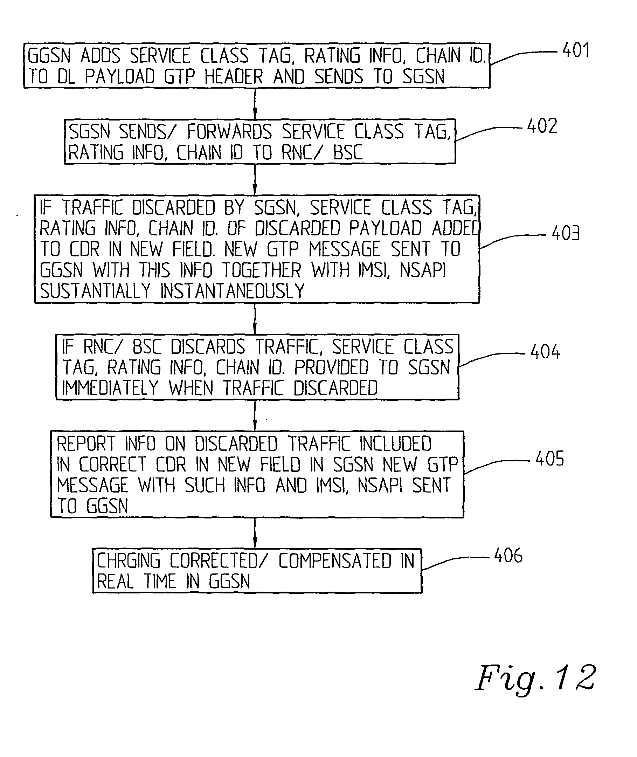

Fig. 12 illustrates a procedure allowing for charging compensation for lost packets in real time. In the shown embodiment GGSN adds service class tag, rating info, chain id to the DL payload GTP header sent to SGSN, 401. SGSN in turn sends/forwards service class tag rating info, chain id to RNC and/or BSC, 402.

If traffic is discarded by SGSN, service class tag, rating info, chain id of the discarded payload may be added to the appropriate CDR in a new field, and a new GTP message is sent to GGSN with this information together with IMSI, NSAPI substantially instantaneously, 403. If RNC and/or BSC dicards traffic, service class tag, rating info, chain id are provided to SGSN immediately upon traffic discarding, 404. Report information about the discarded traffic may then be included in the correct CDR in a new field in SGSN. A new GTP message with such info and IMSI, NSAPI is then sent to GGSN, 405. (cf. step 403). Charging is then corrected/compensated for lost traffic in real time in GGSN, 406.

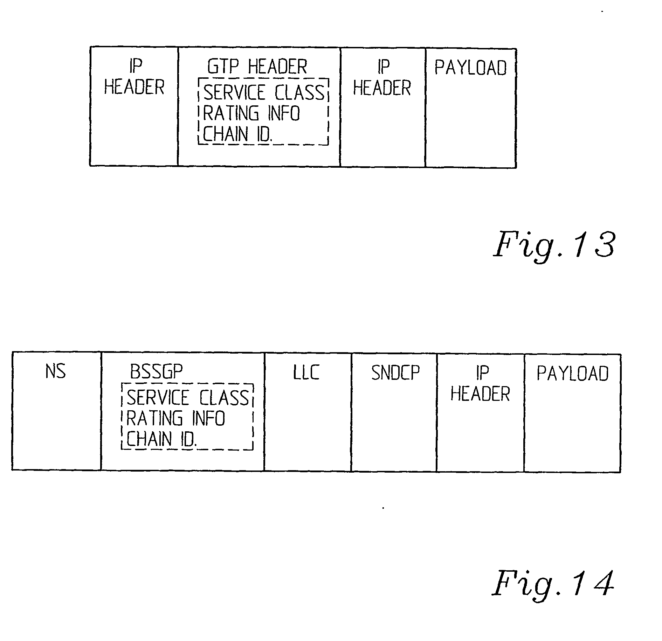

Fig. 13 shows the signalling format used between GGSN-SGSN and SGSN-RNC which use the GTP protocol. The information (e.g. service tag, rating info and chain id), is introduced in the GTP header.

Fig. 14 shows the format used between SGSN and BSC. The relevant information is here introduced into BSSGP. The format is known as such, NS, Network service, LLC, SNDCP Sub Network Dependent Convergence Protocol.

According to the invention it gets possible to compensate flexible charging for downlink payload discarded by e.g. BSC, RNC, SGSN or a node with a similar functionality.

It should be clear that the invention is not limited to the specifically illustrated embodiments, but that it can be varied in a number of ways within the scope of the appended claims.

It should also be clear that other nodes in other communication systems having similar functionalities as e.g. GGSN, SGSN, CGSN, BSC also are covered by the inventive concept.

## Claims

1. An arrangement for allowing compensation of lost, discarded or unsent traffic on the downlink in a communication system supporting communication of packet data and classification of mobile traffic allowing application of different charging schemes for different types of traffic,
**characterized in**
**that** it comprises a packet data node adapted to hand classification of traffic into different types, and to apply an appropriate charging scheme depending on type, that said node is adapted to provide and to send information relating to at least type by providing traffic packets with said information to subsequent nodes on the downlink to a mobile station and in that a subsequent node detecting a packet loss, is adapted to note said loss and to enable use of the information of said loss together with at least type information to enable for correction of charging due to traffic loss.

2. An arrangement according to claim 1,
**characterized in**
**that** correction/compensation for lost traffic is performed at regular, or predetermined occasions, that radio nodes are adapted to provide loss reports to a preceding packet data node, said loss reports including at least said type information for said discarded/lost data traffic, and in that said packet data nodes are adapted to include said type information in a new field in a Call Detail Record

3. An arrangement according to claim 1,
**characterized in**
**that** charging correction/compensation for lost traffic is performed in real time and in that radio nodes are adapted to provide loss reports to a preceding packet data node substantially immediately at occurrence of the loss, and in that a loss report at least including type information is provided to the packet data node supporting flexible charging together with subscriber information and access point identification in a new message .

4. An arrangement according to claim 1, 2 or 3,
**characterized in**
**that** the packet data node comprises a packet data node with a gateway functionality.

5. An arrangement according to claim 1, 2 or 3,
**characterized in**
**that** the packet data node comprises a serving packet data node .

6. An arrangement according to any one of claims 1-5,
**characterized in**
**that** the packet data node comprises a packet data serving functionality and a gateway functionality.

7. An arrangement according to any one of the preceding claims,
**characterized in**
**that** said packet data node adapted to handle classification and labeling is adapted to label traffic packets with service class information and rating information.

8. An arrangement according to any one of claims 1-6,
**characterized in**
**that** said packet data node adapted to handle classification and labeling is adapted to label traffic packets with service class information and a time stamp.

9. An arrangement according to claim 7 or 8,
**characterized in**
**that** the traffic packets are provided with chain identification information.

10. An arrangement according to any one of the preceding claims,
**characterized in**
**that** the packet data node is an access node in a GSM/GPRS system in communication with BSC:s.

11. An arrangement according to any one of claims 1-9,
**characterized in**
**that** the packet data is an access node adapted to support a UMTS/GPRS system and to support communication with RNC:s.

12. An arrangement according to claim 10 and 11,
**characterized in**
**that** the packet data node is a dual access node adapted to support communication with BSC:s as well as RNC:s.

13. An arrangement at least according to claim 2,
**characterized in**
**that** loss reports relating to discarded traffic are sent periodically or at given times.

14. An arrangement at least according to claim 2,
**characterized in**
**that** loss reports relating to discarded traffic are sent based on the volume of the discarded traffic.

15. An arrangement at least according to claim 3,
**characterized in**
**that** loss reports relating to discarded traffic are provided/sent in real time, substantially instantly at the occurrence of a loss directly or indirectly to the node handling flexible charging.

16. An arrangement according to any one of the preceding claims,
**characterized in**
**that** the classification and charging scheme application handling is performed by a gateway packet data node and in that it supports a content based charging functionality or IP flow based bearer level charging.

17. An arrangement according to claim 16,
**characterized in**
**that** information at least relating to type is provided to a packet data node with a serving functionality and in that said node is adapted to forward such information to subsequent nodes, and in that if for communication between the serving packet data node and a subsequent node a different protocol is used than the protocol used between the serving node and the gateway packet data node, a conversion is performed such that the information can be sent over said other protocol.

18. An arrangement according to claim 17,
**characterized in**
**that** the serving packet data node is a SGSN, that the gateway packet data node is a GGSN and in that the information relating to at least type is added to the GTP header of the downlink payload to SGSN, if relevant to RNC:s, whereas if it is to be forwarded to BSC:s, the information is included in the BSSGP header.

19. An arrangement at least according to claim 3,
**characterized in**
**that** for an RNC having discarded traffic, a loss report comprising a RANAP Data Volume Report is sent substantially instantaneously at occurrence of the loss of data to the preceding packet data node uplinks and in that unless such preceding node is adadpted to handle node uplinks and in that unlesssuch preceding node is adapted to handle flexible charging, it is adapted to send the new loss report message with IMSI, NASAPI to the node adapted to handle such functionality.

20. An arrangement at least according to claim 3,
**characterized in**
**that** for a BSC having discarded traffic, a loss report including at least service class information, rating information or a time stamp, is sent substantially instantaneously at occurrence of the loss to the preceding packet data node uplinks for charging correction/compensation, and in that said packet data node unless itself is adapted to handle the flexible charging functionality, it is adapted to provide the new loss report message with IMSI, NSAPI to the node adapted to handle such functionality.

21. An arrangement according to any one of the preceding claims,
**characterized in**
**that** the subsequent nodes are adapted to registe information about discarded packets.

22. A packet data node in a communications system supporting communication of packet data handling classification and/or application of charging depending on type of or characteristic of traffic
**characterized in**
**that** it comprises means for sending information about at least type of data packets sent on the downlink to subsequent nodes by providing traffic packets with said information and means for receiving reports from a subsequent node, the reports relating to discarded/lost traffic packets with at least type information allowing said packet data node to modify charging to compensate for lost data packets, unless said packet data node itself supports the flexible charging functionality.

23. A packet data node according to claim 22,
**characterized in**
**that** it comprises a serving packet data support node (SGSN), a gateway packet data support node (GGSN) or a combined gateway and serving packet data support node (CGSN).

24. A packet data support node according to claim 22 or 23,
**characterized in**
**that** it adapted to forward service class information (QoS), rating information or time stamp information for sent packets or chain information to subsequent nodes.

25. A packet data support node according to any one of claims 22-24,
**characterized in**
**that** it is adapted to support real time compensation/correction for lost packets and in that loss reports are provided in real time .

26. A method for allowing charging correction or compensation for lost discarded or unsent data packets on the downlink towards a mobile station in a system supporting content based charging or flexible bearer charging,
**characterized in**
**that** it comprises the steps of:
- sending information at least relating to assigned charging scheme to subsequent nodes from a node handling classification of packets and/or flexible/content based charging by providing traffical packets with said information;
- sending a report from such a subsequent node towards the node handling classification and/or application of flexible/content based charging from a node discarding an IP packet unless itself supports flexible/content based charging.

27. A method according to claim 26,
**characterized in**
**that** the step of sending information downlink comprises sending of service class, rating information or providing a time stamp for a packet, and optionally information for identifying the chain an IP packet belongs to.

28. A method according to claim 26 or 27,
**characterized in**
**that** the reporting step comprises:
- sending a report including subscriber information, access point identifier substantially instantaneously from a node detecting that a packet is discarded to allow for real time compensation/correction, and in that such node further
- registers discarded packet type and amount of discarded packets.

29. A method according to any one of claims 26-28,
**characterized in**
**that** the reporting step comprises:
- introducing the reporting information in a packet sent over the relevant protocol between nodes up to the node handling classification/content based charging.

30. A method according to any one of claims 26-29,
**characterized in**
**that** the node handling classification/charging comprises a gateway packet data node, a serving packet data node or a combined gateway and serving packet data node.

31. A method according to claim 26,
**characterized in**
**that** reporting is performed based on volume, with given time intervals or at given points in time, e.g. supporting CDR-based charging.

## Patentansprüche

1. Anordnung zum Ermöglichen eines Ausgleichs von verlorenem, verworfenem oder nicht gesendetem Verkehr auf der Abwärtsverbindungsstrecke in einem Kommunikationssystem, das eine Kommunikation von Paketdaten und eine Klassifizierung von mobilem Verkehr unterstützt, welche die Anwendung verschiedener Abrechnungsschemata für verschiedene Arten von Verkehr ermöglicht,
**dadurch gekennzeichnet,**
**dass** sie einen Paketdatenknoten umfasst, der zum Handhaben einer Klassifizierung von Verkehr in verschiedene Typen ausgebildet ist sowie zum Anwenden eines geeigneten Abrechnungsschemas abhängig vom Typ, wobei der Knoten zum Bereitstellen und Senden von Informationen ausgebildet ist, die sich auf mindestens einen Typ beziehen, indem Verkehrspakete mit den Informationen an folgende Knoten auf der Abwärtsverbindungsstrecke zu einer Mobilstation bereitgestellt werden, und dass ein folgender Knoten, der einen Paketverlust erfasst, zum Feststellen des Verlustes und zum Ermöglichen der Verwendung der Informationen des Verlustes gemeinsam mit mindestens Typinformationen ausgebildet ist, um eine Abrechnungskorrektur aufgrund eines Verkehrsverlustes zu ermöglichen.

2. Anordnung nach Anspruch 1,
**dadurch gekennzeichnet,**
**dass** eine Korrektur/ein Ausgleich von verlorenem Verkehr zu regelmäßigen oder vorbestimmten Gelegenheiten stattfindet, dass Funkknoten zum Bereitstellen von Verlustberichten an einen vorangehenden Paketdatenknoten ausgebildet sind, wobei die Verlustbereichte mindestens die Typinformationen für den verworfenen/verlorenen Datenverkehr enthalten, und dass die Paketdatenknoten die Typinformationen in einem neuen Feld in einem Call Detail Record (Anrufdetailbericht) enthalten.

3. Anordnung nach Anspruch 1,
**dadurch gekennzeichnet,**
**dass** eine Abrechnungskorrektur/ein Abrechnungsausgleich für verlorenen Verkehr in Echtzeit ausgeführt wird und dass Funkknoten zum Bereitstellen von Verlustberichten an einen vorangehenden Paketdatenknoten im Wesentlichen unmittelbar bei Auftreten des Verlustes ausgebildet sind und dass ein Verlustbericht, der mindestens Typinformationen beinhaltet, an dem Paketdatenknoten, der eine flexible Abrechnung unterstützt, gemeinsam mit Teilnehmerinformationen und einer Zugangspunktidentifizierung in einer neuen Nachricht bereitgestellt wird.

4. Anordnung nach Anspruch 1, 2 oder 3,
**dadurch gekennzeichnet,**
**dass** der Paketdatenknoten einen Paketdatenknoten mit einer Gateway-Funktionalität umfasst.

5. Anordnung nach Anspruch 1, 2 oder 3,
**dadurch gekennzeichnet,**
**dass** der Paketdatenknoten einen bedienenden Paketdatenknoten umfasst.

6. Anordnung nach einem der Ansprüche 1 bis 5,
**dadurch gekennzeichnet,**
**dass** der Paketdatenknoten eine Paketdatenbedienungsfunktionalität und eine Gateway-Funktionalität umfasst.

7. Anordnung nach einem der vorangehenden Ansprüche,
**dadurch gekennzeichnet,**
**dass** der Paketdatenknoten, der zum Handhaben einer Klassifizierung und Etikettierung ausgebildet ist, zum Etikettieren von Verkehrspaketen mit Dienstklasseninformationen und Bewertungsinformationen ausgebildet ist.

8. Anordnung nach einem der Ansprüche 1 bis 6,
**dadurch gekennzeichnet,**
**dass** der Paketdatenknoten, der zum Handhaben einer Klassifizierung und Etikettierung ausgebildet ist, zum Etikettieren von Verkehrspaketen mit Dienstklasseninformationen und einem Zeitstempel ausgebildet ist.

9. Anordnung nach Anspruch 7 oder 8,
**dadurch gekennzeichnet,**
**dass** die Verkehrspakete mit Kettenidentifizierungsinformationen versehen sind.

10. Anordnung nach einem der vorangehenden Ansprüche,
**dadurch gekennzeichnet,**
**dass** der Paketdatenknoten ein Zugangsknoten in einem GSM/GPRS-System in Kommunikation mit BSC:s ist.

11. Anordnung nach einem der vorangehenden Ansprüche 1 bis 9,
**dadurch gekennzeichnet,**
**dass** der Paketdatenknoten ein Zugangsknoten ist, der zum Unterstützen eines UMTS/GPRS-Systems und zum Unterstätzen einer Kommunikation mit RNC:s ausgebildet ist.

12. Anordnung nach Anspruch 10 und 11,
**dadurch gekennzeichnet,**
**dass** der Paketdatenknoten ein Doppelzugangsknoten ist, der zum Unterstützen einer Kommunikation sowohl mit BSC:s wie auch RNC:s ausgebildet ist.

13. Anordnung zumindest nach Anspruch 2,
**dadurch gekennzeichnet,**
**dass** Verlustberichte, die sich auf verworfenen Verkehr beziehen, periodisch oder zu bestimmten Zeitpunkten gesendet werden.

14. Anordnung zumindest nach Anspruch 2,
**dadurch gekennzeichnet,**
**dass** Verlustberichte, die sich auf verworfenen Verkehr beziehen, auf der Basis des Volumens des verworfenen Verkehrs gesendet werden.

15. Anordnung zumindest nach Anspruch 2,
**dadurch gekennzeichnet,**
**dass** Verlustberichte, die sich auf verworfenen Verkehr beziehen, in Echtzeit im Wesentlichen sofort bei Auftreten eines Verlustes direkt oder indirekt an dem/zu dem Knoten bereitgestellt/gesendet werden, der die flexible Abrechnung handhabt.

16. Anordnung nach einem der vorangehenden Ansprüche,
**dadurch gekennzeichnet,**
**dass** die Klassifizierungs- und Abrechnungsschema-Anwendungshandhabung von einem Gateway-Paketdatenknoten durchgeführt wird und dass sie eine auf Inhalt basierende Abrechnungsfunktionalität oder auf IP-Fluss basierende Trägerebenenabrechnung unterstützt.

17. Anordnung nach Anspruch 16,
**dadurch gekennzeichnet,**
**dass** Informationen, die sich zumindest auf einen Typ beziehen, einem Paketdatenknoten mit einer bedienenden Funktionalität bereitgestellt werden und dass der Knoten zum Weiterleiten solcher Informationen zu folgenden Knoten ausgebildet ist, und dass, wenn für eine Kommunikation zwischen dem bedienenden Paketdatenknoten und einem folgenden Knoten ein anderes Protokoll verwendet wird als das Protokoll, das zwischen dem bedienenden Knoten und dem Gateway-Paketdatenknoten verwendet wird, eine Umwandlung durchgeführt wird, so dass die Informationen über das andere Protokoll gesendet werden können.

18. Anordnung nach Anspruch 17,
**dadurch gekennzeichnet,**
**dass** der bedienende Paketdatenknoten ein SGSN ist, dass der Gateway-Paketdatenknoten ein GGSN ist und dass die Informationen, die sich zumindest auf einen Typ beziehen, dem GTP-Anfangskennsatz der Nutzdaten auf der Abwärtsverbindungsstrecke zum SGSN hinzugefügt werden, falls sie für RNC:s relevant sind, während die Informationen, wenn sie zu BSC:s weitergeleitet werden, im BSSGP-Anfangskennsatz enthalten sind.

19. Anordnung zumindest nach Anspruch 3,
**dadurch gekennzeichnet,**
**dass** für einen RNC mit verworfenem Verkehr ein Verlustbericht, der einen RANAP-Datenvolumenbericht enthält, im Wesentlichen sofort bei Eintreten des Datenverlustes zu den Aufwärtsverbindungsstrecken des vorangehenden Paketdatenknotens gesendet wird und dass, falls ein solcher vorangehender Knoten nicht zum Handhaben einer flexiblen Abrechnung ausgebildet ist, er dazu ausgebildet ist, die neue Verlustberichtnachricht mit IMSI, NASAPI zu dem Knoten zu senden, der für die Handhabung einer solchen Funktionalität ausgebildet ist.

20. Anordnung zumindest nach Anspruch 3,
**dadurch gekennzeichnet,**
**dass** für einen BSC mit verworfenem Verkehr ein Verlustbericht, der zumindest Dienstklasseninformationen, Bewertungsinformationen oder einen Zeitstempel enthält, im Wesentlichen sofort bei Eintreten des Datenverlustes zu dem vorangehenden Paketdatenknoten in Aufwärtsverbindungsstreckenrichtung zur Abrechnungskorrektur/zum Abrechnungsausgleich gesendet wird, und dass der Paketdatenknoten, wenn er nicht selbst zum Handhaben einer flexiblen Abrechnung ausgebildet ist, dazu ausgebildet ist, die neue Verlustberichtnachricht mit IMSI, NASAPI dem Knoten bereitzustellen, der für die Handhabung einer solchen Funktionalität ausgebildet ist.

21. Anordnung nach einem der vorangehenden Ansprüche,
**dadurch gekennzeichnet,**
**dass** die folgenden Knoten zum Registrieren von Informationen über verworfene Pakete ausgebildet sind.

22. Paketdatenknoten in einem Kommunikationssystem, das eine Kommunikation von Paketdaten unterstützt, der eine Klassifizierung und/oder Anwendung einer Abrechnung abhängig von einer Art oder Eigenschaft eines Verkehrs handhabt,
**dadurch gekennzeichnet,**
**dass** er Mittel zum Senden von Informationen über zumindest einen Typ von Datenpaketen umfasst, die auf der Abwärtsverbindungsstrecke zu folgenden Knoten gesendet werden, indem Verkehrspakete mit den Informationen versehen werden, sowie Mittel zum Empfangen von Berichten von einem folgenden Knoten, wobei sich die Berichte auf verworfene/verlorene Verkehrspakete beziehen, mit mindestens einer Art von Informationen, die dem Paketdatenknoten ermöglichen, die Abrechnung zu verändern, um verlorene Datenpakete auszugleichen, wenn der Paketdatenknoten nicht selbst die flexible Abrechnungsfunktionalität unterstützt.

23. Paketdatenknoten nach Anspruch 22,
**dadurch gekennzeichnet,**
**dass** er einen bedienenden Paketdatenunterstützungsknoten (SGSN), einen Gateway-Paketdatenunterstützungsknoten (GGSN) oder einen kombinierten Gateway- und bedienenden Paketdatenunterstützungsknoten (CGSN) umfasst.

24. Paketdatenknoten nach Anspruch 22 oder 23,
**dadurch gekennzeichnet,**
**dass** er zum Weiterleiten von Dienstklasseninformationen (QoS), Bewertungsinformationen oder Zeitstempelinformationen für gesendete Pakete oder Ketteninformation zu folgenden Knoten ausgebildet ist.

25. Paketdatenknoten nach einem der Ansprüche 22 bis 24,
**dadurch gekennzeichnet,**
**dass** er zum Unterstützen eines Ausgleichs/einer Korrektur von verlorenen Paketen in Echtzeit ausgebildet ist und dass Verlustbereicht in Echtzeit bereitgestellt werden.

26. Verfahren zum Ermöglichen einer Abrechnungskorrektur oder eines Abrechnungsausgleichs für verlorene, verworfene oder nicht gesendete Datenpakete auf einer Abwärtsverbindungsstrecke zu einer Mobilstation in einem System, das eine auf Inhalt basierende Abrechnung oder flexible Trägerabrechnung unterstützt,
**dadurch gekennzeichnet,**
**dass** es die folgenden Schritte umfasst:
- Senden von Informationen, die sich zumindest auf ein zugeordnetes Abrechnungsschema beziehen, zu folgenden Knoten von einem Knoten, der eine Klassifizierung von Paketen und/oder eine flexible/auf Inhalt basierende Abrechnung handhabt, durch Versehen von Verkehrspaketen mit den Informationen;
- Senden eines Berichts von einem solchen folgenden Knoten zu dem Knoten, der eine Klassifizierung und/oder Anwendung einer flexiblen/auf Inhalt basierenden Abrechnung handhabt, von einem Knoten, der ein IP-Paket verwirft, falls er nicht selbst eine flexible/auf Inhalt basierende Abrechnung unterstützt.

27. Verfahren nach Anspruch 26,
**dadurch gekennzeichnet,**
**dass** der Schritt des Sendens von Informationen über die Abwärtsverbindungsstrecke das Senden einer Dienstklasse, von Bewertungsinformationen oder das Bereitstellen eines Zeitstempels für ein Paket umfasst, und optional von Informationen zum Identifizieren der Kette, zu der ein IP-Paket gehört.

28. Verfahren nach Anspruch 26 oder 27,
**dadurch gekennzeichnet,**
**dass** der Berichterstattungsschritt umfasst:
- Senden eines Berichts, einschließlich Teilnehmerinformationen, einer Zugangspunktkennung, im Wesentlichen sofort von einem Knoten, der erfasst, dass ein Paket verworfen wird, so dass ein Ausgleich/eine Korrektur in Echtzeit möglich ist, und dass ein solcher Knoten des Weiteren
- einen verworfenen Pakettyp und eine Menge an verworfenen Paketen registriert.

29. Verfahren nach einem der Ansprüche 26 bis 28,
**dadurch gekennzeichnet,**
**dass** der Berichterstattungsschritt umfasst:
- Einführen der Berichterstattungsinformationen in ein Paket, das über das relevante Protokoll zwischen Knoten bis zu dem Knoten gesendet wird, der die Klassifizierung/auf Inhalt basierende Abrechnung handhabt.

30. Verfahren nach einem der Ansprüche 26 bis 29,
**dadurch gekennzeichnet,**
**dass** der Knoten, der die Klassifizierung/Abrechnung handhabt, einen Gateway-Paketdatenknoten, einen bedienenden Paketdatenknoten oder einen kombinierten Gateway- und bedienenden Paketdatenunterstützungsknoten umfasst

31. Verfahren nach Anspruch 26,
**dadurch gekennzeichnet,**
**dass** die Berichterstattung auf der Basis eines Volumens, mit festgelegten Zeitintervallen oder an bestimmten Zeitpunkten erfolgt, z.B. in Unterstützung einer CDR-basierten Abrechnung.

## Revendications

1. Agencement pour permettre la compensation de trafic perdu, rejeté ou non envoyé sur la liaison descendante dans un système de communication prenant en charge la communication de données en paquets et la classification de trafic mobile permettant l'application de différentes structures de facturation pour différents types de trafic,
**caractérisé en ce qu'**il comprend un noeud de données en paquets apte à gérer la classification de trafic en différents types, et à appliquer une structure de facturation appropriée en fonction du type, **en ce que** ledit noeud est apte à fournir et à envoyer des informations relatives à au moins un type en fournissant des paquets de trafic avec lesdites informations à des noeuds suivants sur la liaison descendante à une station mobile et **en ce qu'**un noeud suivant détectant une perte de paquet est apte à noter ladite perte et à permettre l'utilisation des informations de ladite perte avec au moins des informations de type pour permettre la correction de la facturation en raison de la perte de trafic.

2. Agencement selon la revendication 1, **caractérisé en ce que** la correction/compensation de trafic perdu est effectuée à des occasions régulières ou prédéterminées, **en ce que** des noeuds radio sont aptes à fournir des rapports de perte à un noeud de données en paquets précédent, lesdits rapports de perte comprenant au moins lesdites informations de type pour ledit trafic de données rejeté/perdu, et **en ce que** lesdits noeuds de données en paquets sont aptes à inclure lesdites informations de type dans un nouveau champ dans un enregistrement de détails d'appel.

3. Agencement selon la revendication 1, **caractérisé en ce que** la correction/compensation de facturation pour trafic perdu est effectuée en temps réel et **en ce que** des noeuds radio sont aptes à fournir des rapports de perte à un noeud de données en paquets précédent sensiblement immédiatement lors de la survenance de la perte, et **en ce qu'**un rapport de perte comprenant au moins des informations de type est fourni au noeud de données en paquets prenant en charge une facturation flexible avec des informations d'abonné et une identification de point d'accès dans un nouveau message.

4. Agencement selon la revendication 1, 2 ou 3, **caractérisé en ce que** le noeud de données en paquets comprend un noeud de données en paquets avec une fonctionnalité de passerelle.

5. Agencement selon la revendication 1, 2 ou 3, **caractérisé en ce que** le noeud de données en paquets comprend un noeud de données en paquets de desserte.

6. Agencement selon l'une quelconque des revendications 1 à 5, **caractérisé en ce que** le noeud de données en paquets comprend une fonctionnalité de desserte de données en paquets et une fonctionnalité de passerelle.

7. Agencement selon l'une quelconque des revendications précédentes, **caractérisé en ce que** ledit noeud de données en paquets apte à gérer la classification et l'étiquetage est apte à étiqueter des paquets de trafic avec des informations de catégorie de service et des informations de notation.

8. Agencement selon l'une quelconque des revendications 1 à 6, **caractérisé en ce que** ledit noeud de données en paquets apte à gérer la classification et l'étiquetage est apte à étiqueter des paquets de trafic avec des informations de catégorie de service et un horodatage.

9. Agencement selon la revendication 7 ou 8, **caractérisé en ce que** les paquets de trafic sont fournis avec des informations d'identification de chaîne.

10. Agencement selon l'une quelconque des revendications précédentes, **caractérisé en ce que** le noeud de données en paquets est un noeud d'accès dans un système GSM/GPRS en communication avec des BSC.

11. Agencement selon l'une quelconque des revendications 1 à 9, **caractérisé en ce que** les données en paquets sont un noeud d'accès apte à prendre en charge un système UMTS/GPRS et à prendre en charge une communication avec des RNC.

12. Agencement selon les revendications 10 et 11, **caractérisé en ce que** le noeud de données en paquets est un noeud d'accès double apte à prendre en charge une communication avec des BSC et des RNC.

13. Agencement au moins selon la revendication 2, **caractérisé en ce que** des rapports de pertes relatifs à du trafic rejeté sont envoyés périodiquement ou à des moments donnés.

14. Agencement au moins selon la revendication 2, **caractérisé en ce que** des rapports de pertes relatifs à du trafic rejeté sont envoyés sur la base du volume du trafic rejeté.

15. Agencement au moins selon la revendication 3, **caractérisé en ce que** des rapports de pertes relatifs à du trafic rejeté sont fournis/envoyés en temps réel, sensiblement instantanément lors de la survenance d'une perte directement ou indirectement au noeud gérant la facturation flexible.

16. Agencement selon l'une quelconque des revendications précédentes, caractérisé en ce la gestion de la classification et de l'application de la structure de facturation est effectuée par un noeud de données en paquets de passerelle et en ce qu'elle prend en charge une fonctionnalité de facturation basée sur le contenu ou une facturation de niveau de porteuse basée sur le flux IP.

17. Agencement selon la revendication 16, **caractérisé en ce que** des informations au moins relatives à un type sont fournies à un noeud de données en paquets avec une fonctionnalité de desserte et **en ce que** ledit noeud est apte à transférer de telles informations à des noeuds suivants, et **en ce que**, si pour une communication entre le noeud de données en paquets de desserte et un noeud suivant, un protocole utilisé est différent du protocole utilisé entre le noeud de desserte et le noeud de données en paquets de passerelle, une conversion est effectuée de sorte que les informations puissent être envoyées sur ledit autre protocole.

18. Agencement selon la revendication 17, **caractérisé en ce que** le noeud de données en paquets de desserte est un SGSN, **en ce que** le noeud de données en paquets de passerelle est un GGSN et **en ce que** les informations relatives à au moins un type sont ajoutées à l'en-tête GTP de la charge utile de liaison descendante au SGSN, si cela est pertinent aux RNC, tandis que, si elles doivent être transférées à des BSC, les informations sont incluses dans l'en-tête BSSGP.

19. Agencement au moins selon la revendication 3, **caractérisé en ce que**, pour un RNC ayant un trafic rejeté, un rapport de perte comprenant un rapport de volume de données RANAP est envoyé sensiblement instantanément lors de la survenance de la perte de données aux liaisons montantes du noeud de données en paquets précédent, et **en ce que**, à moins que ledit noeud ne soit apte à gérer la facturation flexible, il est apte à envoyer le nouveau message de rapport de perte avec IMSI, NASAPI au noeud apte à gérer une telle fonctionnalité.

20. Agencement au moins selon la revendication 3, **caractérisé en ce que**, pour un BSC ayant un trafic rejeté, un rapport de perte comprenant au moins des informations de catégorie de service, des informations de notation ou un horodatage, est envoyé sensiblement instantanément lors de la survenance de la perte aux liaisons montantes du noeud de données en paquets précédent pour la correction/compensation de facturation, et **en ce que** ledit noeud de données en paquets, à moins qu'il ne soit apte à gérer la fonctionnalité de facturation flexible, est apte à fournir le nouveau message de rapport de perte avec IMSI, NSAPI au noeud apte à gérer une telle fonctionnalité.

21. Agencement selon l'une quelconque des revendications précédentes, **caractérisé en ce que** les noeuds suivants sont apte à enregistrer des informations relatives à des paquets rejetés.

22. Noeud de données en paquets dans un système de communication prenant en charge une communication de données en paquets gérant une classification et/ou une application de facturation en fonction du type ou d'une caractéristique du trafic,
**caractérisé en ce qu'**il comprend des moyens pour envoyer des informations relatives à au moins un type de paquets de données envoyés sur la liaison descendante à des noeuds suivants en fournissant des paquets de trafic avec lesdites informations et des moyens pour recevoir des rapports d'un noeud suivant, les rapports étant relatifs à des paquets de trafic rejetés/perdus avec au moins des informations de type permettant au dit noeud de données en paquets de modifier la facturation pour compenser les paquets de données perdus, à moins que ledit noeud de données en paquets ne prenne en charge la fonctionnalité de facturation flexible.

23. Noeud de données en paquets selon la revendication 22, **caractérisé en ce qu'**il comprend un noeud de prise en charge de données en paquets de desserte (SGSN), un noeud de prise en charge de données en paquets de passerelle (GGSN) ou un noeud combiné de prise en charge de données en paquets de passerelle et de desserte (CGSN).

24. Noeud de prise en charge de données en paquets selon la revendication 22 ou 23, **caractérisé en ce qu'**il est apte à transférer des informations de catégorie de service (QoS), des informations de notation ou des informations d'horodatage pour des paquets envoyés ou des informations de chaîne à des noeuds suivants.

25. Noeud de prise en charge de données en paquets selon l'une quelconque des revendications 22 à 24, **caractérisé en ce qu'**il est apte à prendre en charge la compensation/correction en temps réel de paquets perdus et **en ce que** des rapports de pertes sont fournis en temps réel.

26. Procédé pour permettre la correction ou la compensation de facturation pour des paquets de données perdus, rejetés ou non envoyés sur la liaison descendante vers une station mobile dans un système prenant en charge la facturation basée sur le contenu ou la facturation de porteuse flexible,
**caractérisé en ce qu'**il comprend les étapes de :
- l'envoi d'informations au moins relatives à une structure de facturation assignée à des noeuds suivants à partir d'un noeud gérant la classification de paquets et/ou la facturation flexible/basée sur le contenu en fournissant des paquets de trafic avec lesdites informations ;
- l'envoi d'un rapport à partir d'un tel noeud suivant vers le noeud gérant la classification et/ou l'application de la facturation flexible/basée sur le contenu à partir d'un noeud rejetant un paquet IP à moins qu'il ne prenne en charge la facturation flexible/basée sur le contenu.

27. Procédé selon la revendication 26, **caractérisé en ce que** l'étape de l'envoi d'informations en liaison descendante comprend l'envoi d'informations de catégorie de service ou de notation ou la fourniture d'un horodatage pour un paquet, et optionnellement d'informations pour l'identification de la chaîne à laquelle un paquet IP appartient.

28. Procédé selon la revendication 26 ou 27, **caractérisé en ce que** l'étape de rapport comprend :
- l'envoi d'un rapport comprenant des informations d'abonné et un identifiant de point d'accès sensiblement instantanément à partir d'un noeud détectant qu'un paquet est rejeté pour permettre la compensation/correction en temps réel,
et **en ce qu'**un tel noeud en outre
- enregistre le type de paquet rejeté et la quantité de paquets rejetés.

29. Procédé selon l'une quelconque des revendication 26 à 28, **caractérisé en ce que** l'étape de rapport comprend
- l'introduction des informations de rapport dans un paquet envoyé sur le protocole pertinent entre des noeuds jusqu'au noeud gérant la classification/la facturation basée sur le contenu.

30. Procédé selon l'une quelconque des revendication 26 à 29, **caractérisé en ce que** le noeud gérant la classification/la facturation comprend un noeud de données en paquets de passerelle, un noeud de données en paquets de desserte ou un noeud combiné de données en paquets de passerelle et de desserte.

31. Procédé selon la revendication 26, **caractérisé en ce que** le rapport est effectué sur la base du volume à des intervalles de temps donnés ou à des moments donnés, par exemple en prenant en charge la facturation basée sur CDR.
